Europäisches Patentamt

European Patent Office

Office européen des brevets

(19)

(11) Veröffentlichungsnummer : **0 098 403**
**B1**

(12) # EUROPÄISCHE PATENTSCHRIFT

(45) Veröffentlichungstag der Patentschrift :
01.10.86

(21) Anmeldenummer : 83105678.3

(22) Anmeldetag : 10.06.83

(51) Int. Cl.⁴ : **H 04 B 9/00, G 02 B 27/00**

(54) Vorrichtung zur Übertragung von Informationen.

(30) Priorität : 15.06.82 DE 3222441

(43) Veröffentlichungstag der Anmeldung :
18.01.84 Patentblatt 84/03

(45) Bekanntmachung des Hinweises auf die Patenterteilung : 01.10.86 Patentblatt 86/40

(84) Benannte Vertragsstaaten :
**CH DE FR GB LI NL**

(56) Entgegenhaltungen :
**DE-A- 2 441 359**
**US-A- 4 107 517**
**US-A- 4 175 230**
**US-A- 4 190 318**

(73) Patentinhaber : **Firma Carl Zeiss**

**D-7920 Heidenheim (Brenz) (DE)**
**CH DE FR LI NL**
**CARL ZEISS-STIFTUNG HANDELND ALS CARL ZEISS**

**D-7920 Heidenheim (Brenz) (DE)**
**GB**

(72) Erfinder : **Kürbitz, Gunther, Dr.**
**Helfensteinstrasse 5**
**D-7923 Königsbronn-Zang (DE)**

## Beschreibung

Die Erfindung betrifft eine Vorrichtung zur Übertragung von Informationen zwischen einem rotierenden und einem feststehenden Geräteteil, wobei eines der Geräteteile mindestens eine Lichtquelle für einen die Information enthaltenden modulierten Lichtstrom trägt und das andere Geräteteil mindestens eine lichtempfindliche Empfangseinrichtung trägt und wobei kein direktes Licht der Lichtquelle und kein nur einmal reflektiertes Licht der Lichtquelle die Empfangseinrichtung trifft.

Bei derartigen Vorrichtungen wird eine möglichst große Verschleißfreiheit angestrebt. Außerdem soll durch eine derartige Vorrichtung einem vorhandenen Stromkreis kein zusätzliches Rauschen aufgeprägt werden.

Es ist bekannt, zur Übertragung von Signalen und/oder Energien zwischen zwei relativ zueinander rotierenden Geräteteilen mechanische Schleifringe zu verwenden. Man versteht darunter einen metallischen Ring, der über einen Federkontakt mit einem elektrischen Gerät verbunden ist und bei Drehung oder Verschiebung schleifend einen elektrischen Kontakt herstellt. So kann beispielsweise mit dem Läufer eines elektrischen Generators ein metallischer Ring verbunden sein, auf dem zur Stromzufuhr oder -abnahme die sog. Bürste aufliegt. Derartige Schleifringe sind mit hohem Verschleiß behaftet, führen zu Reibungsverlusten und verursachen unerwünschte Stromwärme. Bei gealterten Schleifringen kann es auch zu kurzzeitigen Unterbrechungen in der Kontaktgabe kommen.

Aus der US-PS 4 190 318 ist eine Vorrichtung bekannt, die zur Informationsübermittlung zwischen zwei relativ zueinander rotierenden Geräteteilen einen modulierten Lichtstrom und einen lichtempfindlichen Detektor verwendet und die durch die Verwendung mehrerer, in regelmäßigem Abstand auf dem Umfang eines der Geräteteile angeordnete Sende- bzw. Empfangseinrichtungen gekennzeichnet ist. Ein Nachteil dieser bekannten Vorrichtungen besteht darin, daß bei konstantem Sendesignal das von der Empfangseinrichtung empfangene Signal bei Rotation der beiden Geräteteile gegeneinander eine Modulation erfährt. Dem zu übertragenden Nutzsignal wird somit ein rotationsbedingtes Störsignal überlagert. Eine Übertragung analog verschlüsselter Information ist bei dieser bekannten Vorrichtung dadurch verhindert. Auch bei geeigneter digitaler Verschlüsselung der zu übertragenden Information ist infolge der durch die Rotation bedingten Amplitudenmodulation der Signale ein erheblicher Dynamikbereich der elektronischen Schaltungsteile erforderlich. Aus der US-A 4 175 230 ist eine Informationsübermittlungsvorrichtung bekannt, bei der die Flächen der Geräteteile zwischen Lichtquelle und Empfänger verspiegelt sind. Die verspiegelten Flächen sind stoßempfindlich.

Der Erfindung liegt die Aufgabe zugrunde, eine Vorrichtung zum Übertragen von Information und/oder Energien zwischen zwei relativ zueinander rotierenden Geräteteilen anzugeben, die frei ist vom Nachteil der bekannten Vorrichtung. Außerdem soll die Information in einer elektronisch leicht zu verarbeitenden Form zu übertragen werden.

Diese Aufgabe wird erfindungsgemäß dadurch gelöst, daß das die Lichtquelle tragende Geräteteil und das die Empfangseinrichtung tragende Geräteteil möglichst vollständig, jedoch diffus reflektierende Oberflächen besitzen und daß zwischen Lichtquelle und Empfangseinrichtung mindestens eine Blende vorgesehen ist, die ebenfalls eine möglichst vollständig, jedoch diffus reflektierende Oberfläche besitzt.

Der Wellenlängenbereich des für die Vorrichtung verwendeten Lichtes kann vom ultravioletten bis zum infraroten Bereich gehen.

Durch die Oberflächengestaltung der Blenden wird erreicht, daß der bei konstantem Sendesignal von der Empfangseinrichtung empfangene Strahlungsfluß auch bei Rotation der Geräteteile gegeneinander unabhängig von der relativen Stellung der Teile zueinander praktisch konstant ist.

Für die elektronische Verarbeitung der Informationen können diese digital codiert oder analog übertragen werden.

Die mit der Erfindung erzielten Vorteile liegen insbesondere in der Freiheit des Nutzsignals von rotationsbedingten Störsignalen, in der leichten Verarbeitbarkeit der übertragenen Informationen und in der Möglichkeit, gleichzeitig mehrere Informationsflüsse zu übertragen.

Zur Übertragung mehrerer Informationsflüsse können entweder mehrere, optisch getrennte Kanäle vorgesehen sein oder es kann jedem Informationsfluß ein eigener Wellenlängenbereich zugeordnet werden.

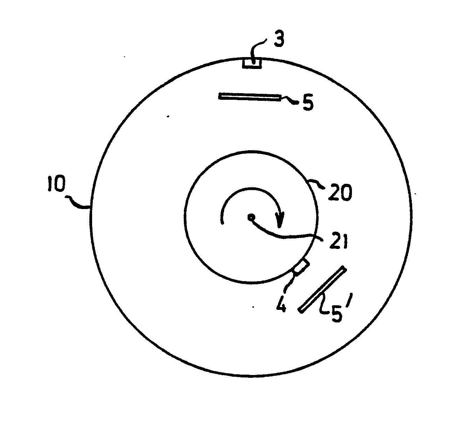

Ein Ausführungsbeispiel der Erfindung ist in der Zeichnung dargestellt und wird im folgenden näher beschrieben.

Die einzige Figur zeigt eine Geräteeinheit mit einer Lichtquelle und einem lichtempfindlichen Empfänger und zwei Blenden.

Im gezeigten Ausführungsbeispiel ist der äußere, mit dem Bezugszeichen 10 gekennzeichnete Teil einer Geräteeinheit feststehend und trägt eine Lichtquellen 3, deren modulierter Lichtstrom die zu übertragende Information enthält. Der innere, mit 20 gekennzeichnete Teil der Geräteeinheit rotiert um eine Achse 21 und enthält eine lichtempfindliche Empfangseinrichtungen 4, die den empfangenen modulierten Lichtstrom der Lichtquelle 3 in elektrische Signale umsetzen. Die Strahlungsflußrichtung kann auch umgekehrt sein, so daß der äußere Teil die Empfangseinrichtung enthält und der innere Teil die Lichtquelle. Ebenso ist es denkbar, daß der äußere Teil rotiert und der innere Teil feststeht. Die Dynamik der lichtempfindlichen Empfangseinrichtung ist im Ausführungsbeispiel der Erfindung so groß, daß die von ihnen erzeugten elektrischen Signale unabhängig von der Entfernung der Empfangseinrichtungen von der Lichtquelle ein eindeutiges Maß für die übermittelten Informationen sind. Die Blenden 5,5′ sorgen dafür, daß nicht das direkte emittierte Licht der Lichtquelle 3 die Empfangseinheit 4 trifft. Lichtquelle, Empfangseinheit und Blende sind mit einer möglichst vollständig jedoch diffus reflektierenden Oberfläche versehen.

### Patentansprüche

1. Vorrichtung zur Übertragung von Informationen zwischen einem rotierenden (20) und einem feststehenden Geräteteil (10), wobei eines der Geräteteile mindestens eine Lichtquelle (3) für einen die Information enthaltenden modulierten Lichtstrom trägt und das andere Geräteteil mindestens eine lichtempfindliche Empfangseinrichtung (4) trägt und wobei kein direktes Licht der Lichtquelle und kein nur einmal reflektiertes Licht der Lichtquelle die Empfangseinrichtung trifft, dadurch gekennzeichnet, daß das die Lichtquelle (3) tragende Geräteteil (10) und das die Empfangseinrichtung (4) tragende Geräteteil (20) möglichst vollständig, jedoch diffus reflektierende Oberflächen besitzen und daß zwischen Lichtquelle und Empfangseinrichtung mindestens eine Blende (5, 5′) vorgesehen ist, die ebenfalls eine möglichst vollständig, jedoch diffus reflektierende Oberfläche besitzt.

2. Vorrichtung nach Anspruch 1, dadurch gekennzeichnet, daß die übertragene Information digital codiert ist.

3. Vorrichtung nach Anspruch 1, dadurch gekennzeichnet, daß die Information analog übertragen wird.

4. Vorrichtung nach Anspruch 1, dadurch gekennzeichnet, daß zur Übertragung mehrerer Informationsflüsse optisch getrennte Kanäle vorgesehen sind.

5. Vorrichtung nach Anspruch 1, dadurch gekennzeichnet, daß zur Übertragung mehrerer Informationsflüsse mehrere Lichtströme unterschiedlicher Wellenlängenbereiche vorgesehen sind.

### Claims

1. A device for transmitting information between a rotating (20) and a stationary part (10) of an apparatus, in which one of the apparatus parts bears at least one source of light (3) for a modulated luminous flux containing the information and the other apparatus part bears at least one photosensitive receiving means (4) and in which no direct light from the source of light and no light which has been reflected only once from the source of light strikes the receiving means, characterized by the fact that the apparatus part (10) bearing the source of light (3) and the apparatus part (20) bearing the receiving means (4) have surfaces which reflect as completely as possible but diffusely and that between the source of light and the receiving means there is at least one diaphragm (5, 5′) which also has a surface which reflects as completely as possible but diffusely.

2. A device according to claim 1, characterized by the fact that the information transmitted is digitally coded.

3. A device according to claim 1, characterized by the fact that the information is transmitted in analog form.

4. A device according to claim 1, characterized by the fact that optically separate channels are provided for the transmission of a plurality of information flows.

5. A device according to claim 1, characterized by the fact that a pluratily of light fluxes of different wavelength regions are provided for the transmission of a plurality of information flows.

### Revendications

1. Dispositif pour la transmission d'informations entre une partie d'appareil tournante (20) et une partie d'appareil stationnaire (10), dans lequel une des parties d'appareil porte au moins une source de lumière (3) pour un flux lumineux modulé contenant l'information et l'autre partie d'appareil porte au moins un dispositif récepteur photosensible (4) et dans lequel aucune lumière de la source de lumière seulement réfléchie une fois ne tombe sur le dispositif récepteur, caractérisé en ce que la partie d'appareil (10) portant la source de lumière (3) et la partie d'appareil (20) portant le dispositif récepteur (4) possèdent des surfaces qui sont réfléchissantes autant que possible entièrement mais de façon diffuse et qu'au moins un écran (5, 5′), possédant également une surface qui est réfléchissante autant que possible entièrement mais de façon diffuse, est prévu entre la source de lumière et le dispositif récepteur.

2. Dispositif selon la revendication 1, caractérisé en ce que l'information transmise est codée numérique.

3. Dispositif selon la revendication 1, caractérisé en ce que l'information est transmise sous forme analogique.

4. Dispositif selon la revendication 1, caractérisé en ce que des canaux séparés optiquement sont prévus pour la transmission de plusieurs flux d'informations.

5. Dispositif selon la revendication 1, caractérisé en ce que plusieurs flux lumineux de différentes gammes d'ondes sont prévus pour la transmission de plusieurs flux d'informations.